Europäisches Patentamt

European Patent Office

Office européen des brevets

(19)

(11) **EP 0 798 032 A1**

(12) **EUROPEAN PATENT APPLICATION**

(43) Date of publication:
01.10.1997 Bulletin 1997/40

(51) Int Cl.6: **B01D 53/52, C01B 17/04**

(21) Application number: 97301949.0

(22) Date of filing: 21.03.1997

(84) Designated Contracting States:
**BE DE FR GB IT NL SE**

(30) Priority: **29.03.1996 GB 9606685**

(71) Applicant: **The BOC Group plc**
**Windlesham Surrey GU20 6HJ (GB)**

(72) Inventors:
• **Stuart, David Mark**
**Wimbledon SW19 4HU (GB)**

• **Watson, Richard William**
**Guildford, Surrey, GU4 7HJ (GB)**

(74) Representative: **Wickham, Michael**
**c/o Patent and Trademark Department**
**The BOC Group plc**
**Chertsey Road**
**Windlesham Surrey GU20 6HJ (GB)**

(54) **Gas separation**

(57)     A burner 4 and furnace 6 are operated to form a gas mixture comprising hydrogen sulphide, sulphur dioxide, carbon dioxide, water vapour and sulphur vapour from a feed gas stream comprising hydrogen sulphide and carbon dioxide. Sulphur vapour but not water vapour is extracted in a condenser 16. All the hydrogen sulphide is oxidised to sulphur dioxide (or all the sulphur dioxide reduced to hydrogen sulphide) in a reactor 22. The resulting gas mixture is dried in drier 30 and compressed in compressor 32. It is then fractionally distilled in distillation column 38. A top fraction essentially free of sulphur compounds is vented while a bottom fraction may be recycled to the furnace 6.

**Description**

This invention relates to a method and apparatus for separating a gas mixture. In particular, it relates to a method and apparatus for treating a feed gas stream comprising hydrogen sulphide, sulphur dioxide and carbon dioxide which employs fractional distillation.

So-called acid gas streams comprising hydrogen sulphide and carbon dioxide are formed as waste streams in, for example, oil refineries. It is necessary to treat the acid gas stream so as to remove substantially all its content of hydrogen sulphide before it is discharged to the atmosphere. The removal of hydrogen sulphide is conventionally performed by the Claus process, in which part of the hydrogen sulphide content is burned to form sulphur dioxide and water vapour, resultant sulphur dioxide reacts with residual hydrogen sulphide to form a gas mixture comprising hydrogen sulphide, sulphur dioxide, carbon dioxide, water vapour, and sulphur vapour, the sulphur vapour is extracted from the gas mixture by condensation, and the resulting gas mixture free of sulphur vapour is subjected to a plurality of catalytic stages for further reaction between sulphur dioxide and hydrogen sulphide so as to form further sulphur vapour. The further sulphur vapour is extracted from the gas mixture downstream of each stage of catalytic reaction. A tail gas containing typically from 2 to 6% of the original sulphur content of the acid gas is thereby formed. The tail gas sent for further treatment to remove substantially all the remaining sulphur compounds.

Various proposals have been made for improving the Claus process. For example, oxygen or oxygen-enriched air can be employed to support the combustion of hydrogen sulphide in the initial stage of the process. Such use of oxygen or oxygen-enriched air has the effect of increasing the rate at which an apparatus of a given size can accept acid gas for treatment. EP-A-0 565 316 relates to a process in which downstream of the initial extraction of sulphur vapour, at least part of the resulting gas mixture free of sulphur vapour, instead of being sent to a catalytic stage for carrying out further reaction between hydrogen sulphide and sulphur dioxide, is sent to a catalytic reactor in which all its content of sulphur dioxide is reduced to hydrogen sulphide. Water vapour is then extracted from the resulting gas mixture. At least part of the gas mixture is recycled to the initial furnace. A number of different examples of such processes are disclosed in EP-A-0 565 316. In one example, not all the gas mixture free of sulphur vapour is sent to the catalytic reactor. A part of it is sent to at least one further stage of reaction between hydrogen sulphide and sulphur dioxide. Further sulphur vapour is therefore formed, and this sulphur vapour is extracted in a further condenser. The gas mixture leaving the further condenser forms a purge gas. In other examples of the process according to EP-A-0 565 316 all of the gas mixture free of sulphur vapour is sent to the catalytic reactor in which sulphur dioxide is reduced to hydrogen sulphide. A gas stream is taken from that being recycled to the initial furnace and is subjected to stages of further reaction between hydrogen sulphide and sulphur dioxide to form further sulphur vapour and a purge gas. In a yet further example, the purge gas is formed by withdrawing a gas mixture from an upstream region of the initial furnace and subjecting it to at least one further stage of reaction between hydrogen sulphide and sulphur dioxide so as to form sulphur vapour and to at least one stage of extraction of the further sulphur vapour. In a final example, the purge stream is formed by diverting a flow from the recycle gas and sending this flow directly to an incinerator.

It is also disclosed in EP-A-0 565 316 that downstream of the extraction of water vapour, the recycle or purge stream may be subjected to a further treatment to separate hydrogen sulphide from other components thereof. It is disclosed that the gas stream may, for example, be washed with an amine to effect such separation. The amine is able to separate hydrogen sulphide from carbon dioxide. It is stated that such treatment is believed to be only of value if the feed gas stream has a relatively high proportion, in total, of non-combustibles, or if in some circumstances it is desired to omit further stages of reaction between hydrogen sulphide and sulphur dioxide.

EP-A-0 500 320 discloses processes which are generally similar to those described in EP-A-0 565 316, but which instead of reducing all the sulphur dioxide content of the gas mixture free of sulphur vapour, oxidises the entire sulphide content of this gas mixture to sulphur dioxide. As a result, a recycle gas mixture comprising sulphur dioxide and carbon dioxide is formed.

The processes according to EP-A-0 500 320 and 0-565 316 offer the advantages of increased effective conversion of hydrogen sulphide to sulphur vapour in the initial furnace and a substantially reduced requirement for catalytic reaction between hydrogen sulphide and sulphur dioxide. Nonetheless, the processes disclosed therein entail the formation of a purge stream which cannot be viewed as being essentially free of compounds of sulphur and which if strict standards as to the pollution of the atmosphere are to be observed requires further treatment in a tail gas clean up unit to remove the sulphur compounds.

EP-A-0 212 297 discloses Claus processes operated at such an elevated pressure that water vapour is condensed and extracted with the sulphur vapour downstream of the Claus furnace. The bulk of the resulting gas stream is recycled to the Claus furnace. The remainder passes through a tail gas clean-up unit including an incinerator and a fractionator. Sulphur dioxide from the fractionator is recycled to the Claus furnace.

It is an aim of the present invention to provide a method and apparatus which enables a gas mixture comprising hydrogen sulphide, sulphur dioxide and carbon dioxide to be separated into a purge stream essentially free of compounds of sulphur and a stream relatively rich in hydrogen sulphide or sulphur dioxide.

According to the present invention there is provided a method of treating a feed gas stream comprising hydrogen sulphide and carbon dioxide, comprising the steps of:

(i) oxidising to sulphur dioxide part of the hydrogen sulphide content of the feed gas stream and reacting resulting sulphur dioxide with hydrogen sulphide so as to form sulphur vapour and water vapour;

(ii) extracting so formed sulphur vapour without extracting water vapour from the reacted feed stream so as to form an intermediate gas stream comprising hydrogen sulphide, sulphur dioxide, carbon dioxide and water vapour;

(iii) forming a converted gas stream comprising carbon dioxide and only one sulphur compound selected from hydrogen sulphide and sulphur dioxide by converting either all the sulphur dioxide content of the intermediate gas stream to hydrogen sulphide or all the hydrogen sulphide content of the intermediate gas stream to sulphur dioxide;

(iv) drying and compressing the converted gas stream;

(v) subjecting at least part of the dried and compressed converted gas stream to fractional distillation so as to form a first fraction essentially free of the selected sulphur compound and a second fraction enriched in the selected sulphur compound; and

(vi) venting from the process a stream of the first fraction.

The invention also provides apparatus for treating a feed gas stream comprising hydrogen sulphide and carbon dioxide, comprising:

(a) a furnace for conducting both the oxidation to sulphur dioxide and water vapour of a part of the hydrogen sulphide content of the feed gas stream and reaction of resulting sulphur dioxide with residual hydrogen sulphide so as to form sulphur vapour and water vapour;

(b) a sulphur condenser for the extraction of the so-formed sulphur vapour without the co-extraction of water vapour from the reacted gas stream so as to form an intermediate gas stream comprising hydrogen sulphide, sulphur dioxide, carbon dioxide and water vapour;

(c) a reactor for forming a converted gas stream containing carbon dioxide and only one sulphur compound selected from hydrogen sulphide and sulphur dioxide by conversion of either all the sulphur dioxide content of the intermediate gas stream to hydrogen sulphide or all the hydrogen sulphide content of the intermediate gas stream to sulphur dioxide;

(d) means for drying and means for compressing the converted gas stream;

(e) at least one distillation column for fractionally distilling at least part of the dried and compressed converted gas stream so as to form a first fraction essentially free of the selected sulphur compound and a second fraction enriched in the selected sulphur compound; and

(f) an outlet from the distillation column for venting from the apparatus a stream of the first fraction.

By the term "essentially free of the selected sulphur compound" as used herein is meant that the first fraction contains less than 1% by volume of the selected sulphur compound. Preferably, the first fraction contains less than 1000 volumes per million, more preferably less than 100 volumes per million of the selected sulphur compound. The stream of the first fraction may therefore be vented to the atmosphere or flared. If the sulphur compound is hydrogen sulphide the stream of the first fraction is preferably incinerated upstream of being vented.

Preferably, the entire dried and compressed converted gas stream is passed to the fractional distillation, and a stream of the second fraction is recycled to the said step (i). (The recycle stream may be premixed with the feed gas stream and/or introduced separately into the furnace. The separate introduction may be into a flame zone or a downstream thermal reaction zone, or both.) Alternatively, only part of the dried and compressed converted gas stream is passed to the fractional distillation, and the remainder thereof is recycled to the said step (i). Although the recycle enables a relatively high percentage conversion of hydrogen sulphide entering the furnace in the feed gas stream to be achieved, that is a relatively high ratio of rate of sulphur recovery in step (ii) to rate of entry of hydrogen sulphide to step (i) in the feed gas stream (but not in the recycle stream), the percentage conversion in terms of all the sulphur

EP 0 798 032 A1

compounds entering step (i) remains at a conventional level, e.g. in the order of 70%.

If it is wished to avoid a recycle to step (i), the dried and compressed converted gas stream is preferably sent to a separate Claus plant, or, if the selected compound is sulphur dioxide, this stream may be sent to a contact process for making sulphuric acid.

Air, oxygen-enriched air, or pure oxygen may be used as the oxidant in step (i). Preferably, the proportion of components other than oxygen in the oxidant is kept to a minimum; accordingly an oxidant containing at least 90% by volume of oxygen is preferred. The reactions of step (i) are preferably performed in at least one furnace. If desired, a part of the reaction of sulphur dioxide with hydrogen sulphide may be performed catalytically in a reactor separate from and downstream of the furnace. In such examples, sulphur extraction takes place upstream and downstream of the catalytic reaction between hydrogen sulphide and sulphur dioxide. It is an advantage of the method and apparatus according to the invention that they can generally be operated without there being any catalysed reaction between hydrogen sulphide and sulphur dioxide. The catalysed reaction may, however, be advantageously included if it is desired to keep down the rate of recycle to step (i), for example, in order to maintain an adequate flame temperature if the feed has a relatively low concentration of combustibles and the recycle gas comprises sulphur dioxide.

If the oxidant is rich in oxygen, for example, if it comprises at least 90% by volume of oxygen, or if the feed gas has a high proportion of combustibles, for example, 70% or more by volume, and particularly if both of the above conditions apply, the oxidation of step (i) may need to be performed in two separate furnaces, preferably arranged in series, if desired, with a sulphur condenser therebetween, so as to spread the thermal "load" over the two furnaces and to avoid creating localised excessive temperatures at the furnace walls. On the other hand, if the feed gas stream is relatively lean in combustibles, or if the oxidant is relatively lean in oxygen, for example, if the oxidant is air unenriched in oxygen, and particularly if two or more of these conditions apply, it may be desirable to preheat one or more of the fluid streams flowing into step (i) so as to ensure that combustion can be sustained in step (i), and, if the feed gas stream includes ammonia, also to ensure that a sufficient temperature for the complete destruction of ammonia is maintained in step (i). If the feed gas stream is free of ammonia some of the feed may by-pass the flame zone of the furnace.

If the selected sulphur compound is hydrogen sulphide, the mole ratio of hydrogen sulphide to sulphur dioxide in the intermediate gas stream is preferably super-stoichiometric, i.e. more than the stoichiometric ratio of 2:1. The super-stoichiometric mole ratio is a result of a greater percentage conversion of sulphur dioxide to sulphur than occurs with the stoichiometric ratio and arises from the recycle of hydrogen sulphide to step (i). The super-stoichiometric mole ratio reduces the amount of reduction in step (iii). Typically, the mole ratio is in the range of 2.5:1 to 4:1.

If, on the other hand, the selected sulphur compound is sulphur dioxide, the mole ratio of hydrogen sulphide to sulphur dioxide in the intermediate rate gas stream is preferably sub-stoichiometric, i.e. less than 2:1. The sub-stoichiometric mole ratio is a result of a greater percentage conversion of hydrogen sulphide to sulphur dioxide than occurs with the stoichiometric ratio and is a consequence of the recycle of sulphur dioxide to step (i). The sub-stoichiometric mole ratio reduces the amount of oxidation in step (iii) but increases the amount of hydrogen sulphide that is subjected to combustion in step (i). There is some freedom in selecting the relative amounts of oxidation of hydrogen sulphide that takes place in step (iii) and step (i), although the total amount of oxidation of hydrogen sulphide in the two steps remains approximately constant. The mole ratio of hydrogen sulphide in the feed gas stream to molecular oxygen entering step (i) is preferably in the range of 2.5:1 to 4:1 if the selected sulphur compound is sulphur dioxide.

If the selected sulphur compound is hydrogen sulphide, the reduction of sulphur dioxide in step (iii) of the method according to the invention is preferably performed by catalytic reduction employing hydrogen as the reductant. If the oxidant in step (i) is rich in oxygen, it is possible therein to generate a flame that has a high temperature core in which the thermal dissociation of hydrogen sulphide into hydrogen and sulphur takes place. Since the reassociation reaction of hydrogen and sulphur does not go to complete, the gas stream comprising hydrogen sulphide, sulphur dioxide and carbon dioxide typically also contains some hydrogen. In some examples, this hydrogen is sufficient to meet most or all of the requirements for hydrogen in the reduction of sulphur dioxide in step (iii). Carbon monoxide is also typically formed in the furnace by thermal dissociation of carbon dioxide. This carbon monoxide may lead to formation of hydrogen during step (iii) as will be described below and can therefore be a further source of hydrogen for the reduction of sulphur dioxide in step (iii).

Preferably, if the selected sulphur compound is hydrogen sulphide, the gas stream comprising hydrogen sulphide, sulphur dioxide and carbon dioxide enters step (iii) of the method according to the invention at a temperature of at least 250°C. More preferably, the temperature is in the range of 275 to 350°C. Catalysts suitable for the reduction of sulphur dioxide are well known in the art. The catalyst may, for example, be a cobalt-molybdenum catalyst. Such catalysts also catalyse the water gas shift reaction between carbon monoxide and water vapour. Therefore water vapour and any carbon monoxide in the gas stream can react to form further hydrogen and carbon dioxide.

If the selected sulphur compound is sulphur dioxide, the oxidation of the hydrogen sulphide content of the gas stream to sulphur dioxide is preferably performed at least in part catalytically. The gas stream comprising hydrogen sulphide, sulphur dioxide and carbon dioxide is preferably preheated to a temperature of at least 200°C upstream of

4

the catalytic oxidation. The oxidant may be a gas containing molecular oxygen, for example, pure oxygen, oxygen-enriched air, or air. If air (unenriched in oxygen) is used as the oxidant in step (iii), rather than pure oxygen, the size of the furnace in which the said step (i) is performed is unaffected, since nitrogen and carbon dioxide are separated in the first fraction in the distillation and are therefore not passed to the furnace. Carbon monoxide may also be oxidised to carbon dioxide.

In general, mixtures of sulphur dioxide and carbon dioxide are easier to separate by distillation than mixtures of hydrogen sulphide and carbon dioxide, requiring fewer theoretical trays to obtain a given degree of separation. Accordingly, it is usually preferred that sulphur dioxide be the selected sulphur compound. By selecting sulphur dioxide, it is possible to form a vent stream of the first fraction that contains less than 10 parts per million by volume of sulphur dioxide. Equipment upstream of the distillation that handles either a gas mixture containing sulphur dioxide and water vapour or which contacts the gas mixture containing sulphur dioxide with a flow of liquid water is desirably formed of (acid) corrosion-resistant materials.

The drying of the converted gas stream preferably includes the step of adsorbing water vapour therefrom. It preferably also includes upstream of the adsorption step, the steps of cooling the converted gas stream so as to cause water vapour therein to condense, and extracting condensate therefrom. In a preferred sequence of steps, the converted gas stream passes through, in sequence, a steam raising heat exchanger, a desuperheating, direct contact, water condenser, and an adsorbent bed containing adsorbent able selectively to adsorb water vapour from the converted gas stream.

Particularly if the selected sulphur compound is sulphur dioxide, the drying of the converted gas stream is preferably performed upstream of its compression.

Preferably, the oxidation according to the said step (i) is performed at a pressure in the range of 1.5 to 2 bar absolute so as to facilitate its passage through the apparatus according to the invention.

The fractional distillation is preferably performed in a single column at a pressure greater than 5.3 bar absolute, that is above the pressure at the triple point of carbon dioxide. The pressure is selected so as to avoid formation and accumulation of solid carbon dioxide. The higher the operating pressure of the single column, the higher is the condensing temperature at the top of the column, and the higher is the reboiling temperature at the bottom of the column. In the example of separation of hydrogen sulphide from carbon dioxide, these temperatures are typically always both below ambient temperature, and it is therefore necessary to operate the single column at a relatively high pressure if it is desired to keep down the refrigeration requirements of a condenser associated with the top of the column. The maximum pressure at which the single column can be operated may, however, be limited by constraints related to the size of the compressor. Since the flow to the single column is relatively small compared with the flow of fresh feed into the method according to the invention, difficulties may arise in finding a compressor of sufficiently low capacity if the operating pressure of the single column is particularly high. Typically, however, no such difficulty will arise if the operating pressure of the single column does not exceed 20 bar absolute.

The feed to the fractional distillation is preferably pre-cooled in indirect heat exchange with a stream of the first fraction; if the selected sulphur compound is hydrogen sulphide, the feed to the fractional distillation may also be pre-cooled in indirect heat exchange with a stream of the second fraction.

The feed to the single distillation column preferably enters the column at an intermediate level thereof.

Fluids for cooling the condenser associated with the top of the single column and for heating a reboiler associated with the bottom of the single column may be selected in accordance with the respective condensing and reboiling temperatures. If the selected sulphur compound is hydrogen sulphide, propane may be employed to heat the reboiler and ethane to cool the condenser.

If desired, achieving the necessary low condensing temperature may be facilitated by employing a cooling fluid which is taken from and returned to a cryogenic air separation plant, or by pre-cooling a selected cooling fluid in indirect heat exchange with a fluid taken from and returned to the air separation plant.

If desired, a plurality of distillation columns may be used to perform the distillation instead of a single column.

If desired, work may be recovered from the stream of the first fraction, for example by expanding the stream in an expansion turbine with the performance of external work such as the generation of electrical power. The stream of the first fraction is preferably pre-heated to above 200°C upstream of the expansion turbine.

The method and apparatus according to the invention offer substantial advantages over known Claus processes. In particular, there is no requirement either for catalytic stages of Claus reaction or for a tail gas clean up unit, even when stringent requirements regarding the sulphur content of the vent stream are to be met. Further, in preferred examples of the method and apparatus according to the invention it is possible to achieve effective conversions of hydrogen sulphide to sulphur approaching 100% (i.e. the ratio of sulphur atoms in the fresh feed to the sulphur atoms in the sulphur product leaving step (i)), this degree of conversion being made possible by virtue of recycle of a stream of the second fraction to step (i). Further, no blower or fan is required to pass a stream of the second fraction to step (i) of the method according to the invention.

The method and apparatus according to the invention will now be described by way of example with reference to the accompanying drawing which is a schematic flow diagram of a sulphur recovery plant.

The drawing is not to scale.

Referring to the drawing, a hydrogen sulphide containing feed gas stream typically comprising at least 40% by volume of combustibles (of which at least 70% by volume is constituted by hydrogen sulphide) and typically additionally including hydrocarbons, ammonia, carbon dioxide and water vapour is fed from a pipeline 2 to a burner 4 which fires into a thermal reactor in the form of a refractory lined furnace 6 typically through one end wall 8 thereof or through a side wall at a position close to the end wall 8 at right angles to the axis of the furnace. The burner 4 is also supplied separately from the pipeline 10 with a stream of oxygen (that has been separated from air) or oxygen-enriched air. The oxygen stream typically contains at least 90% by volume of oxygen and may be separated from air by, for example, pressure swing adsorption or fractional distillation at cryogenic temperatures.

Several chemical reactions take place in the furnace 6. Firstly, there are a number of different combustion reactions depending on the composition to feed gas. If the feed gas contains one or more hydrocarbons, these components react with oxygen to form carbon dioxide and water vapour. If ammonia is present, it is oxidised to nitrogen and water vapour provided that an adequate temperature (preferably above 1300°C) is created in the furnace 6. It is important to ensure that essentially complete destruction of ammonia does take place, as any residual ammonia may partake in undesirable side reactions forming substances that deposit a solid on catalyst in a downstream catalytic reactor thereby reducing its efficiency and increasing the pressure drop to which the gas stream is subjected as it flows through the illustrated plant.

The main combustion reaction is the burning in a flame zone (not shown) of hydrogen sulphide to form water vapour and sulphur dioxide. The relative rates of supply of oxygen and combustibles to the furnace 6 are such as to ensure the complete destruction of ammonia and hydrocarbons (if any) present and combustion of a chosen proportion of the hydrogen sulphide content of the feed gas.

Other important reactions that take place in the flame zone of the furnace 6 are the thermal dissociation of a part of the hydrogen sulphide into hydrogen and sulphur vapour and also some thermal dissociation of carbon dioxide (which is typically present in the feed gas) into carbon monoxide and oxygen, the extent of each dissociation being temperature dependent. In addition, a small amount of carbon disulphide is formed by reaction between sulphur and any hydrocarbon present in the feed gas, and also a small amount of carbon oxysulphide (carbonyl sulphide) by reaction between carbon monoxide and sulphur. Further, carbon monoxide may react with water vapour by the water gas reaction so as to form carbon dioxide and hydrogen.

Sulphur dioxide that is formed in this furnace 6 reacts by the Claus reaction with residual hydrogen sulphide to form water vapour and sulphur vapour. Typically, from 60 to 70% of the sulphur dioxide that is formed reacts with hydrogen sulphide in the furnace 6.

In general, it is preferred to employ a high flame temperature (e.g. 1300 -1650°C) so as to favour the reaction between hydrogen sulphide and sulphur dioxide and also to favour thermal dissociation of hydrogen sulphide. In operating the burner 4 and furnace 6, care should of course be taken to avoid causing damage to the furnace lining. The angle and position of entry of the burner 4 into the furnace 6 and the flame configuration are chosen so as to avoid such damage. The thermal dissociation of hydrogen sulphide has a cooling effect and this is taken into account in selecting the position and angle of entry of the burner 4.

As a result of the reactions that take place in the furnace 6, a gas stream typically comprising hydrogen sulphide, sulphur dioxide, water vapour, sulphur vapour, hydrogen, carbon dioxide, carbon monoxide, argon and nitrogen with traces of carbon oxysulphide and carbon disulphide leaves the furnace 6 through an outlet 12, typically at a temperature in the range of 1300-1650°C. At such temperatures, some of the components of the gas stream are still reacting with one another so it is difficult to specify the precise composition of the gas mixture at this point. The gas stream passes from the outlet 12 directly into a waste heat boiler 14 or other form of heat exchanger in which it is cooled to a temperature in the range of 250-400°C. During the passage of the gas stream through the waste heat boiler 14, there is a tendency for some of the hydrogen to reassociate with sulphur to form hydrogen sulphide.

The cooled gas stream (referred to herein as the intermediate gas stream) passes from the waste heat boiler 14 to a sulphur condenser 16 in which it is further cooled and in which sulphur vapour is condensed and extracted via an outlet 18. The resulting liquid sulphur is typically passed to a sulphur seal pit (not shown). The cooled gas stream leaves the condenser 16 typically at a temperature in the order of 140°C. The stream is heated downstream of the condenser 16 to a temperature of about 300°C, for example, by indirect heat exchange with superheated steam, in a reheater 20.

The thus heated gas stream flows into a catalytic reactor 22 which in one example of the method according to the invention includes a catalyst, for example, of cobalt and molybdenum, that catalyses the reduction by hydrogen to hydrogen sulphide of sulphur dioxide and any residual trace of sulphur vapour. Reaction of any carbon monoxide with water vapour also takes place over the catalyst in the reactor 22 to form hydrogen and carbon dioxide. At least some of the hydrogen necessary for the reduction reactions that take place in the reactor 22 is present in the gas mixture itself. If, however, there is an excess of sulphur dioxide, hydrogen is passed from an external source (not shown) into the catalytic reactor 22 via a pipeline 24 at a rate sufficient to cause complete reduction to hydrogen sulphide of all the sulphur and sulphur dioxide present. The hydrogen may be generated on site, by, for example, partial oxidation of hydrocarbon, preferably using pure oxygen or oxygen-enriched air as an oxidant.

If any carbonyl sulphide and carbon disulphide are present in the intermediate gas stream, they are hydrolysed in the catalytic reactor 22 in accordance with the respective equations:

$$COS + H_2O \rightarrow CO_2 + H_2S$$

$$CS_2 + 2H_2O \rightarrow CO_2 + 2H_2S$$

A reduced gas stream, now consisting essentially of hydrogen sulphide, water vapour, carbon dioxide, nitrogen and argon, leaves the catalytic reactor 22 and flows through a steam raising heat exchanger 26 in which it is cooled to a temperature in the range of 100 to 200°C by indirect heat exchange with water and/or steam. The thus cooled gas stream is introduced into a desuperheating, direct contact water condenser 28. In the condenser 28, the gas stream flows upwardly and comes into contact with descending stream of water. The gas stream is thus cooled and a large proportion of its water vapour condensed, the condensate entering the descending liquid stream. The condenser 28 preferably contains a random or structured packing (not shown) so as to facilitate mass exchange between the ascending vapour and descending liquid. The resulting gas stream, depleted in water vapour, flows through an adsorption unit 30 comprising a plurality of adsorbent beds adapted to separate remaining water vapour from the gas stream either by pressure swing or temperature swing adsorption. The arrangement is that while one or more of the beds adsorb water vapour from the gas stream, the remaining bed or beds are regenerated. Thus, a continuous drying of the gas stream is made possible. Such pressure swing adsorption and temperature swing adsorption dryers are well known in the art. They may typically use activated alumina or silica gel as the adsorbent.

The flow rate of the gas stream from the adsorption unit 30 is considerably less than that of the feed gas through the inlet in view of the removal of sulphur vapour in the condenser 16 and the water vapour in the condenser 28 and the adsorption unit 30. The gas stream flows from the adsorption unit 30 in which its pressure is raised to a value greater than 5.3 bar absolute. The compressor 32 has associated with it an aftercooler 34 for removing heat of compression. The compressed gas stream flows from the aftercooler 34 through a main heat exchanger 36 in which it is cooled to a temperature suitable for its separation by fractional distillation. The thus cooled gas stream flows into a fractional distillation column 38 through an inlet 40 located at an intermediate level of the column such that there are liquid-vapour contact elements, typically in the form of structured packing, both below and above the level of the inlet 40. The distillation column 38 has a condenser 42 associated with its top and a reboiler 44 associated with its bottom.

The distillation column 38 is operated so as to provide a first or top fraction comprising carbon dioxide, nitrogen and argon which is essentially free of hydrogen sulphide and a second or bottom fraction typically containing at least 50% by volume of hydrogen sulphide, the balance being essentially carbon dioxide. The operating pressure of the distillation column 38 is selected so as to ensure that it is greater than the triple point pressure of carbon dioxide (5.3 bar) and to ensure that the condensing temperature in the condenser 42 is several degrees higher than the solidification point of the carbon dioxide in the first fraction. Typically, for example, the condensing temperature may be in the order of -50°C depending on the composition of the first fraction and the operating pressure of the distillation column 38. A part of the first fraction passes as vapour into the condenser 42 from the top of the column 38. This part is condensed by indirect heat exchange with vaporising liquid, for example, liquid ethane. The pressure to which the vaporising liquid ethane is subjected is such that its boiling point is at least two degrees C higher than the triple point temperature of carbon dioxide but at least two degrees C lower than the condensing temperature of the first fraction in the condenser 42. The vaporous ethane flows to a secondary condenser 46 in which it is condensed by indirect heat exchange. The resultant liquid is returned to the condenser 42, the ethane thus flowing in a closed circuit. Cooling for the secondary condenser 46 may be provided by a vaporising stream of liquid oxygen or liquid nitrogen taken from an air separation plant (not shown). The resulting vaporous oxygen or nitrogen may be returned to the air separation plant (not shown). The condensed first fraction is returned to the top region of the distillation 38 as reflux. A part of the first fraction by-passes the condenser 42 and flows through the main heat exchanger 36 countercurrently to the gas mixture flowing to the distillation column 38. It therefore effects at least part of the pre-cooling of the feed to the distillation column 38 and is itself warmed to approximately ambient temperature.

The second fraction flows from the bottom of the distillation column 38 into the reboiler 44 in which it is reboiled by indirect heat exchange with a condensing stream of heat exchange fluid, for example n-propane. Typically, the reboiling temperature is in the order of -18°C depending on the composition of the second fraction and the pressure at which the distillation column 38 is operated. The reboiler 44 is associated with a secondary boiler 48 in which the liquid propane is revaporised by indirect heat exchange with for example ambient air or steam. The resulting vapour then flows back to the reboiler 44.

A part of the reboiled second fraction is returned to the distillation column 38 and provides and upward flow of vapour therethrough. That part of the reboiled second fraction which is not returned to the distillation column 38 is typically warmed to ambient temperature by passage through at least a part of the main heat exchanger 36 countercurrently to the feed stream to the column 38. The thus warmed stream of the second fraction is returned to the furnace 4 via an expansion device 50 which, as shown in the drawing, is typically an expansion valve. In the event that the expansion device 50 is an expansion turbine, the second fraction is preferably heated to above ambient temperature, for example by indirect heat exchange with superheated steam, in a heat exchanger (not shown) intermediate the warm end of the main heat exchanger 36 and the expansion device 50.

By returning the stream of the second fraction to the furnace 4, the overall rate of feed of hydrogen sulphide to that furnace is substantially increased. The returning stream of the second fraction may be premixed with the incoming hydrogen sulphide in the pipeline 2, may be introduced into the flame region (not shown) of the furnace 4, or may be introduced into the furnace 4 at a region downstream of the flame region. Alternatively, a combination of two or more of these measures may be used. The relative rates of flow of hydrogen sulphide, other combustibles and oxygen into the furnace 4 are chosen so as to ensure that all ammonia and hydrocarbons are destroyed without creation of an excessive temperature (e.g. above about 1650°C) at the furnace wall such that there is a substantial risk of damaging the refractory with which the furnace is lined. Since there are no downstream catalytic Claus stages, the conventional need to adjust the flow rates such that the mole ratio of hydrogen sulphide to sulphur dioxide in the gas mixture exiting the condenser 16 is approximately the stoichiometric ratio of 2:1 need no longer be observed. Indeed, it is generally preferred that the flow rates of the respective streams into the furnace 4 are selected such that the mole ratio of hydrogen sulphide to sulphur dioxide in the gas mixture exiting the condenser 16 is substantially above the stoichiometric mole ratio of 2:1. As a result, even if the proportion of non-combustibles in the feed gas to the furnace 4 is less than 30% by volume and the oxygen fed to the furnace 4 is essentially pure, the creation of an excessive temperature in the furnace 4 may be difficult to avoid unless the furnace 4 is split into two separate stages each with its own feed of hydrogen sulphide-containing gas and oxygen, there being a waste heat boiler (not shown) and, if desired, a sulphur condenser (not shown) between the two stages.

The stream of the first fraction that is warmed in the main heat exchanger 36 may be sent to a flare or vented to the atmosphere. If desired, it may be heated to above 200°C in a heat exchanger (not shown) and expanded in a turbine with the performance of external work, for example in generation of electrical power, upstream of its being sent to a flare or vented to the atmosphere. It is important to ensure that the first fraction is essentially free of hydrogen sulphide. Accordingly, a sufficient height of packing is included in the distillation column 38 to achieve this end.

Various modifications may be made to the components and operation of the plant shown in the drawing. For example, the recycle flow to the furnace 6 instead of or in addition to being taken from the second fraction produced in the distillation column 38 may be taken as a side stream either from a position downstream of the adsorption unit 30 but upstream of the compressor 32 or from a position downstream of the aftercooler 34. If the recycled stream is taken from the former of these two positions, a fan (not shown) may be used in order to create the necessary flow. If it is taken from the other position, an expansion device (not shown) is employed to reduce the pressure of the recycle gas stream to the operating pressure of the furnace (which is normally in the range of 1.5 to 2 bar). Such recycle, however, has the effect of increasing the flow of non-reacting gases to the furnace 6 and therefore increases the furnace volume required to treat a given flow of hydrogen sulphide-containing feed gas.

In another modification to the plant shown in the drawing, the catalytic reactor 22 is so operated that it oxidises to sulphur dioxide all the hydrogen sulphide content of the reheated gas stream. In order to effect this oxidation, air or oxygen is introduced into the catalytic reactor 22 through the pipeline 24. The catalytic reactor includes a single stage even if pure oxygen is used as the oxidant. The temperature of the gas entering the reactor 22 is typically in the order of 250°C. The catalyst may for example be a conventional oxidation catalyst of a kind well known in the art. As a result of oxidising all the hydrogen sulphide and sulphur in the gas stream to sulphur dioxide in the reactor 22, the gas leaving this reactor consists essentially of sulphur dioxide, water vapour, carbon dioxide, nitrogen and argon. The presence of sulphur dioxide in this gas mixture instead of hydrogen sulphide has a substantial effect on the operation of the heat exchanger 36, and the distillation column 38 and its associated reboiler 44. The reboiling temperature is substantially increased to above ambient temperature with the result that hot water or steam may be used as the heating fluid in the reboiler 44 instead of propane, and there is thus no need then to employ a second reboiler 48. In addition, the stream of the second fraction, because it is above ambient temperature, bypasses the main heat exchanger 36 and flows directly to the expansion device 50. The recycle stream may be taken from any of the abovementioned positions, but is preferably a stream of the second fraction. If the reactor 22 is an oxidising reactor with the result that all the hydrogen sulphide and sulphur vapour in the gas stream entering it are oxidised to sulphur dioxide, it is generally preferred that the flow rates of the respective streams into the furnace 4 are selected such that the mole ratio of hydrogen sulphide to sulphur dioxide in the gas mixture exiting the condenser is substantially less than the "stoichio-metric" ratio of 2:1. Since a substantial portion of the sulphur dioxide entering the furnace 4 is provided in the recycle stream from the distillation column 38, the creation of an excessive temperature in the furnace 4 is readily avoidable even if the feed gas contains more than 70% by volume of combustibles and the oxygen feed thereto is at least 90% pure.

In another modification a stream of the first fraction may be used as a purge gas in the regeneration of the adsorbent beds of the unit 30.

The method according to the invention is further illustrated by the examples set out in Tables 1 and 2. Table 1 relates to operation of the method when the selected sulphur compound is hydrogen sulphide, and Table 2 to operation when the selected sulphur compound is sulphur dioxide.

In the example set out in Table 1, the furnace 4 comprises two stages with the feeds of oxygen, hydrogen sulphide containing gas mixture and recycle gas split between the stages, and with a waste heat boiler (not shown in the drawing) between the two stages so as to cool the gas mixture flowing from the upstream stage to the downstream stage. Sufficient of the hydrogen formed in the furnace 4 remains in the gas mixture during its cooling in the waste heat boiler 14 and condenser 16, that no flow of hydrogen from an external source to the reactor 20 is required and thus the pipeline 24 may be omitted.

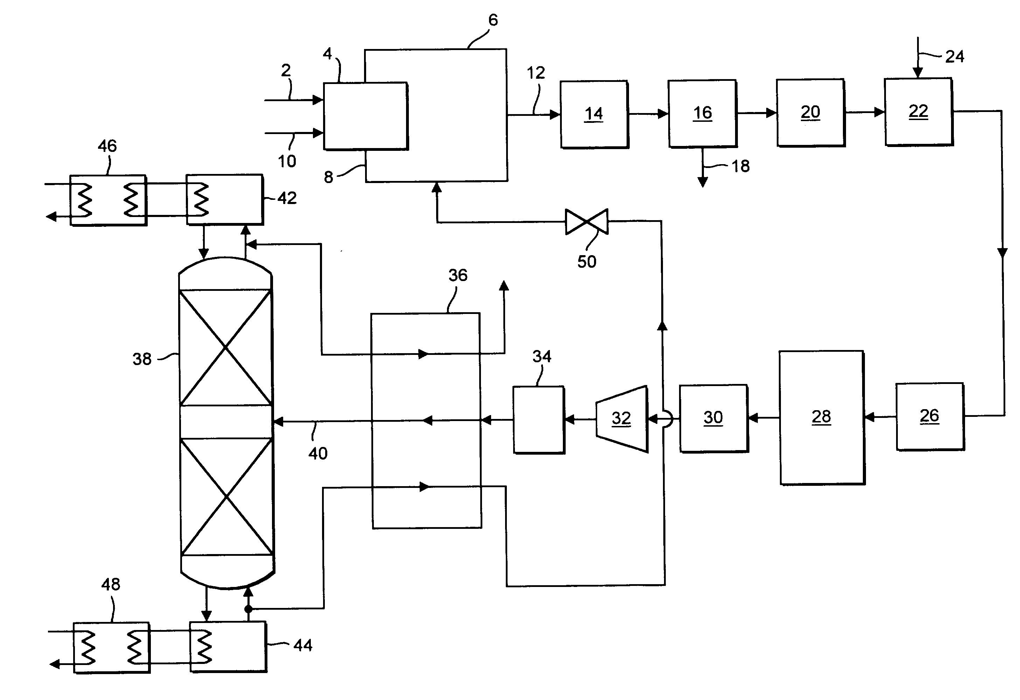

In the example set out in Table 2, the furnace 4 comprises a single stage as shown in Figure 1, having an exit temperature of 1440°C.

In the Tables all flows (i.e. flow rates) are in kgmol/hr.

**TABLE 1**

| Position in plant | | pipeline | pipeline | outlet of valve | outlet of WHB | outlet | outlet of condenser | pipeline | outlet of reactor | outlet of AC | Vent gas outlet* | Inlet to valve |
|---|---|---|---|---|---|---|---|---|---|---|---|---|
| | | 2 | 10 | 50 | 14 | 18 | 16 | 24 | 22 | 34 | | 50 |
| Pressure | Bara | 1.50 | 1.50 | 1.50 | 1.45 | 1.40 | 1.40 | 1.35 | 1.30 | 10.00 | 10.00 | 10.00 |
| Temp | °C | 50 | 50 | 25 | 300 | 190 | 190 | 25 | 500 | 35 | 25 | 25 |
| Total flow | kgmol/hr | 1000.0 | 531.6 | 386.3 | 2395.6 | 879.4 | 1516.2 | 0.0 | 1483.6 | 522.9 | 136.6 | 386.3 |
| $H_2S$ flow | kgmol/hr | 870.0 | - | 386.3 | 353.8 | - | 353.8 | - | 386.3 | 386.3 | - | 386.3 |
| $O_2$ flow | kgmol/hr | - | 505.5 | - | - | - | - | - | - | - | - | - |
| $N_2$ flow | kgmol/hr | - | 26.6 | - | 26.6 | - | 26.6 | - | 26.6 | 26.6 | 26.6 | - |
| $H_2$ flow | kgmol/hr | - | - | - | 66.1 | - | 66.1 | 0.0 | - | - | - | - |
| $SO_2$ flow | kgmol/hr | - | - | - | 16.8 | - | 16.8 | - | - | - | - | - |
| $H_2O$ flow | kgmol/hr | 40.0 | - | - | 936.5 | 9.4 | 927.1 | - | 960.7 | - | - | - |
| $CO_2$ flow | kgmol/hr | 70.0 | - | - | 110.0 | - | 110.0 | - | 110.0 | 110.0 | 110.0 | - |
| S flow | kgmol/hr | - | - | - | 885.8 | 870.0 | 15.8 | - | - | - | - | - |
| $C_2H_6$ flow | kgmol/hr | 20.0 | - | - | - | - | - | - | - | - | - | - |

* from the warm end of the heat exchanger 36

EP 0 798 032 A1

**TABLE 2**

| Position in plant | | pipeline | pipeline | outlet of valve | outlet of WHB | outlet | outlet of condenser | pipeline | outlet of reactor | outlet of AC | Vent gas outlet* | Inlet to valve |
|---|---|---|---|---|---|---|---|---|---|---|---|---|
| | | 2 | 10 | 50 | 14 | 18 | 16 | 24 | 22 | 34 | | 50 |
| Pressure | Bara | 1.50 | 1.50 | 1.50 | 1.45 | 1.40 | 1.40 | 1.35 | 1.30 | 10.00 | 10.00 | 10.00 |
| Temp | °C | 50 | 50 | 25 | 300 | 190 | 190 | 25 | 1450 | 35 | 25 | 25 |
| Total flow | kgmol/hr | 1000.0 | 359.1 | 390.0 | 2258.0 | 879.6 | 1378.4 | 172.5 | 1487.0 | 416.6 | 136.6 | 390.0 |
| $H_2S$ flow | kgmol/hr | 870.0 | - | - | 100.0 | - | 100.0 | - | - | - | - | - |
| $O_2$ flow | kgmol/hr | - | 341.1 | - | - | - | - | 163.9 | - | - | - | - |
| $N_2$ flow | kgmol/hr | - | 18.0 | - | 18.0 | - | 18.0 | 8.6 | 26.6 | 26.6 | 26.6 | - |
| $SO_2$ flow | kgmol/hr | - | - | 390.0 | 276.1 | - | 276.1 | - | 390.0 | 390.0 | - | 390.0 |
| $H_2O$ flow | kgmol/hr | 40.0 | - | - | 870.0 | 9.6 | 860.4 | - | 960.4 | - | - | - |
| $CO_2$ flow | kgmol/hr | 70.0 | - | - | 110.0 | - | 110.0 | - | 110.0 | 110.0 | 110.0 | - |
| S flow | kgmol/hr | - | - | - | 883.9 | 870.0 | 13.9 | - | - | - | - | - |
| $C_2H_6$ flow | kgmol/hr | 20.0 | - | - | - | - | - | - | - | - | - | - |

* from the warm end of the heat exchanger 36

EP 0 798 032 A1

**Claims**

1. A method of treating a feed gas stream comprising hydrogen sulphide and carbon dioxide, comprising the steps of:

   i) oxidising to sulphur dioxide of part of the hydrogen sulphide content of the feed gas stream and reacting resulting sulphur dioxide with hydrogen sulphide so as to form sulphur vapour; and

   ii) extracting so-formed sulphur vapour without extracting water vapour from the reacted feed gas stream so as to form an intermediate gas stream comprising hydrogen sulphide, sulphur dioxide, carbon dioxide and water vapour;

   iii) forming a converted gas stream comprising carbon dioxide and only one sulphur compound selected from hydrogen sulphide and sulphur dioxide by converting either all the sulphur dioxide content of the intermediate gas stream to hydrogen sulphide or all the hydrogen sulphide content of the intermediate gas stream to sulphur dioxide;

   iv) drying and compressing the converted gas stream;

   v) subjecting at least part of the dried and compressed converted gas stream to fractional distillation so as to form a first fraction essentially free of the selected sulphur compound and a second fraction enriched in the selected sulphur compound; and

   vi) venting a stream of the first fraction.

2. A method as claimed in claim 1, in which all of the intermediate gas stream is subjected to the conversion of step (iii).

3. A method as claimed in claim 1 or claim 2, in which the entire dried and compressed converted gas stream is passed to the fractional distillation, and a stream of the second fraction is recycled to the said step i).

4. A method as claimed in claim 1 or claim 2, in which only part of the dried and compressed converted gas stream is passed to the fractional distillation, and the remainder thereof is recycled to the said step i).

5. A method as claimed in any one of claims 1 to 4, in which the selected compound is hydrogen sulphide and the mole ratio of hydrogen sulphide to sulphur dioxide in the reacted gas stream at the end of step (ii) is in the range of 2.5:1 to 4:1.

6. A method as claimed in any one of claims 1 to 4, in which the selected sulphur compound is sulphur dioxide and in which the mole ratio of hydrogen sulphide in the feed gas stream to molecular oxygen entering step (i) is in the range 2.5:1 to 4:1.

7. A method as claimed in any one of the preceding claims, in which the drying of the converted gas stream includes the step of adsorbing water vapour therefrom.

8. A method as claimed in any one of the preceding claims, in which the feed to the fractional distillation is pre-cooled in indirect heat exchange with a stream of the first fraction.

9. Apparatus for treating a feed gas stream comprising hydrogen sulphide, sulphur dioxide and carbon dioxide, comprising:

   a) a furnace for conducting both the oxidation to sulphur dioxide and water vapour of a part of the hydrogen sulphide content of the feed gas stream and reaction of resulting sulphur dioxide with residual hydrogen sulphide so as to form sulphur vapour and water vapour;

   b) a sulphur condenser for the extraction of the so-formed sulphur vapour without the co-extraction of water vapour from the reacted gas stream so as to form an intermediate gas stream comprising hydrogen sulphide, sulphur dioxide, carbon dioxide and water vapour.

   c) a reactor for forming a converted gas stream containing carbon dioxide and only one sulphur compound selected from hydrogen sulphide and sulphur dioxide by conversion of either all the sulphur dioxide content of the intermediate gas stream to hydrogen sulphide or all the hydrogen sulphide content of the intermediate gas stream to sulphur dioxide;

d) means for drying and means for compressing the converted gas stream;

e) at least one distillation column for fractionally distilling at least part of the dried and compressed converted gas stream so as to form a first fraction essentially free of the selected sulphur compound and a second fraction enriched in the selected sulphur compound; and

f) an outlet from the distillation column for venting from the apparatus a stream of the first fraction.

10. Apparatus as claimed in claim 9, including means for passing the entire dried and compressed converted gas stream to the distillation column and means for recycling a stream of the second fraction to the furnace.

11. Apparatus as claimed in claim 9, including means for passing only a part of the dried and compressed converted gas stream to the distillation column, and means for recycling the remainder thereof to the furnace.

12. Apparatus as claimed in any one of claims 9 to 11, additionally including a heat exchanger for pre-cooling the part of the dried and compressed converted gas stream upstream of the distillation column in indirect heat exchange with a stream of the first fraction.

EP 0 798 032 A1

| | European Patent Office | EUROPEAN SEARCH REPORT | Application Number EP 97 30 1949 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,Y | EP 0 500 320 A (BOC GROUP PLC) 26 August 1992 * page 3, line 23 - page 4, line 5; figure 1 * | 1,2,4,9,11 | B01D53/52 C01B17/04 |
| Y | EP 0 038 686 A (KOCH PROCESS SYSTEMS INC) 28 October 1981 * page 1, line 13 - page 2, line 5 * | 1,2,4,9,11 | |
| A | US 3 864 460 A (CONNELL JOSEPH A) 4 February 1975 * column 1, line 30 - line 54; claim 2; figure 1 * | | |

| | | | TECHNICAL FIELDS SEARCHED (Int.Cl.6) |
|---|---|---|---|
| | | | B01J B01D C01B F25J |

The present search report has been drawn up for all claims

| Place of search | Date of completion of the search | Examiner |
|---|---|---|
| THE HAGUE | 2 July 1997 | Faria, C |

EPO FORM 1503 03.82 (P04C01)